# DEMANDE DE BREVET EUROPEEN

(11) **EP 3 104 062 A1**
(43) Date de publication de la demande: **14.12.2016**
(21) Numéro de dépôt: 16172649.2
(22) Date de dépôt: 02.06.2016
(51) Int. Cl.: F21S 8/10, F21V 31/03

(54) **DISPOSITIF LUMINEUX POUR VÉHICULE AUTOMOBILE**

(30) Priorité: 08.06.2015 FR 1555195
(71) Demandeur: VALEO VISION, 93012 Bobigny Cedex (FR)
(72) Inventeur: PUENTE, Jean-Claude, 93190 LIVRY GARGAN (FR); ROUCOULES, Christine, 95170 Deuil la Barre (FR); ALBOU, Pierre, 75013 PARIS (FR); BOURGEOIS, Stéphane, 75012 PARIS (FR)

(57) **Abrégé**

L'invention concerne le domaine de l'industrie automobile et plus particulièrement un dispositif lumineux 1 pour véhicule automobile comprenant :
- au moins un premier orifice 2 de passage d'air, et
- un premier obturateur 21 dudit au moins un premier orifice,
le premier obturateur étant apte à être déplacé entre une position dite de fermeture et une position dite d'ouverture du premier orifice.

Le dispositif lumineux permet ainsi d'atteindre :
- une ventilation efficace, lorsque l'obturateur est en position d'ouverture, notamment quand le véhicule est en mouvement, et
- une relative obstruction à la pénétration de poussières et de liquides, lorsque l'obturateur est en position de fermeture, notamment quand le véhicule est à l'arrêt.

## Description

L'invention concerne le domaine de l'industrie automobile.

L'invention concerne plus particulièrement un dispositif lumineux pour véhicule automobile comprenant au moins un orifice d'entrée ou de sortie d'air.

De tels dispositifs lumineux sont connus pour remplir notamment une fonction d'éclairage et/ou de signalisation. On peut citer parmi ces dispositifs un feu arrière, un projecteur ou phare, ou un dispositif d'éclairage et/ou de signalisation pour l'intérieur du véhicule. Lorsque de tels dispositifs comprennent au moins un orifice d'entrée ou de sortie d'air, ils présentent l'avantage de permettre une circulation d'air plus importante entre l'intérieur et l'extérieur, notamment lorsque le véhicule est en mouvement. Grâce à cette ventilation, l'humidité contenue dans le dispositif lumineux peut en être extraite efficacement de façon à limiter le phénomène de condensation de vapeur d'eau à l'intérieur du dispositif lumineux. Toutefois, les orifices étant constamment ouverts, des poussières et des liquides, tels que des eaux de pluie, y pénètrent relativement aisément, que le véhicule soit à l'arrêt ou en mouvement.

Par ailleurs, il existe des dispositifs lumineux selon le préambule ci-dessus qui comprennent en outre une membrane imperméable agencée conjointement avec ledit au moins un premier orifice. La membrane est plus particulièrement imperméable aux liquides et aux poussières et perméable à l'air, de sorte que la pénétration de poussières et d'eau dans le dispositif lumineux est avantageusement limitée. Toutefois, la ventilation résultante est elle-aussi limitée, même lorsque le véhicule est en mouvement, de sorte que le phénomène de condensation de vapeur d'eau à l'intérieur du dispositif lumineux ne peut pas être efficacement limité.

Il est à noter que les inconvénients et les avantages de chacun des systèmes de ventilation de dispositifs lumineux décrits ci-dessus sont à analyser en fonction de la zone géographique dans laquelle le véhicule évolue ou est destiné à évoluer : tel système de ventilation sera préféré dans une zone chaude et humide, tel autre système sera préféré dans une zone à climat tempéré.

Dans ce contexte, la présente invention propose un dispositif lumineux pour véhicule automobile permettant de pallier un ou plusieurs des inconvénients précédemment évoqués.

A cette fin, le dispositif lumineux de l'invention, par ailleurs conforme à la définition générique qu'en donne le préambule ci-dessus, est essentiellement tel qu'il comprend en outre un premier obturateur dudit au moins un premier orifice, le premier obturateur étant apte à être déplacé entre une position dite de fermeture et une position dite d'ouverture du premier orifice.

En d'autres termes, le premier obturateur est monté mobile afin d'être déplacé entre une position dite de fermeture et une position dite d'ouverture du premier orifice.

Le dispositif lumineux permet ainsi d'atteindre une circulation d'air à l'intérieur dudit dispositif lumineux pour limiter la condensation d'eau sur la glace du dispositif lumineux et/ou évacuer la chaleur dégagée par la source lumineuse.

Le dispositif lumineux permet encore d'atteindre :
- une ventilation efficace, lorsque l'obturateur est en position d'ouverture, que le véhicule soit en mouvement ou à l'arrêt, et
- une relative obstruction à la pénétration de poussières et de liquides, lorsque l'obturateur est en position de fermeture, notamment quand le véhicule est à l'arrêt.

Le premier orifice se situe à l'avant ou à l'arrière du dispositif lumineux.

Selon une particularité, le dispositif lumineux comprend en outre un premier actionneur d'obturateur apte à déplacer le premier obturateur entre la position de fermeture et la position d'ouverture du premier orifice.

Selon une particularité, le dispositif lumineux comprend en outre un dispositif de contrôle d'actionneur(s) destiné à contrôler le premier actionneur pour déplacer le premier obturateur.

Le dispositif lumineux présente ainsi avantageusement un actionnement automatisé des obturateurs.

Selon une autre particularité, le dispositif lumineux comprend en outre un deuxième orifice de passage d'air. Le dispositif lumineux peut comprendre en outre un deuxième obturateur du deuxième orifice. Le deuxième obturateur peut être agencé pour être déplacé conjointement avec le premier obturateur du premier orifice ou pour être déplacé indépendamment du premier obturateur du premier orifice.

Selon une particularité, le dispositif lumineux comprend en outre un deuxième actionneur d'obturateur apte à déplacer le deuxième obturateur entre la position de fermeture et la position d'ouverture du deuxième orifice.

Selon une particularité, le dispositif de contrôle d'actionneur(s) est en outre destiné à contrôler un deuxième actionneur pour déplacer le deuxième obturateur. Le dispositif de contrôle d'actionneur(s) peut contrôler simultanément le premier actionneur et le deuxième actionneur pour déplacer le premier obturateur et le deuxième obturateur. Chaque actionneur peut également être actionné manuellement.

Selon d'autres particularités prises seules ou en combinaison :
- au moins un obturateur, préférentiellement chaque obturateur, comprend une membrane imperméable aux liquides et aux poussières et perméable à l'air, et/ou
- chaque obturateur est de forme et/ou de dimensions adaptées pour permettre une circulation d'air contrôlée entre l'intérieur et l'extérieur du dispositif lumineux, lorsque l'obturateur est en position de fermeture, et/ou
- au moins un actionneur est un actionneur à mémoire de forme, un actionneur motorisé, ou un actionneur à électroaimants, et/ou
- le dispositif de contrôle comprend un capteur de point de rosée et/ou un capteur d'humidité et/ou un capteur de vitesse du véhicule, et/ou
- le dispositif de contrôle est agencé pour recevoir un signal de mesure d'un capteur équipant le véhicule et pour contrôler au moins un actionneur en fonction dudit signal de mesure.

Selon une autre particularité, le dispositif lumineux comprend un orifice supplémentaire de sortie d'air depuis l'intérieur du dispositif lumineux, ledit orifice supplémentaire comprenant un obturateur apte à être déplacé entre une position dite de fermeture et une position d'ouverture de l'orifice supplémentaire en cas de surpression.

Selon une autre particularité, le dispositif lumineux comprend au moins une source lumineuse. Cette source lumineuse comprend au moins un élément émetteur à semi-conducteur, notamment une diode électroluminescente.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue en perspective d'un phare pour véhicule automobile,
- la figure 2 représente une vue en coupe d'un dispositif lumineux selon un mode de réalisation de l'invention lorsque les obturateurs sont en position dite de fermeture,
- la figure 3 représente une vue en coupe d'un dispositif lumineux selon le mode de réalisation de l'invention illustrée sur la figure 1, lorsque les obturateurs sont en position d'ouverture,
- la figure 4 représente une vue en perspective d'un obturateur selon un mode de réalisation de l'invention,
- la figure 5 représente un synoptique du dispositif lumineux selon un mode de réalisation de l'invention, et
- la figure 6 représente un synoptique du dispositif lumineux selon un autre mode de réalisation de l'invention.

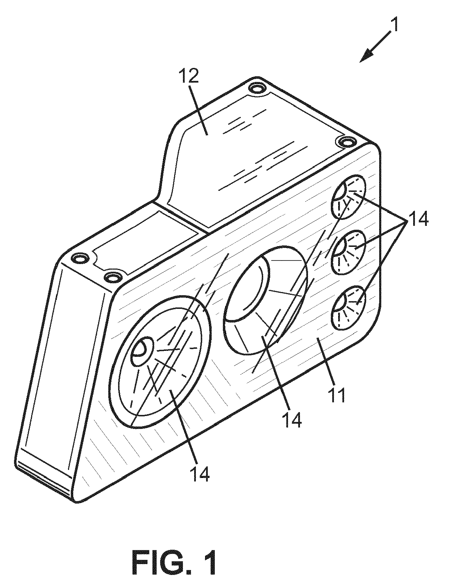

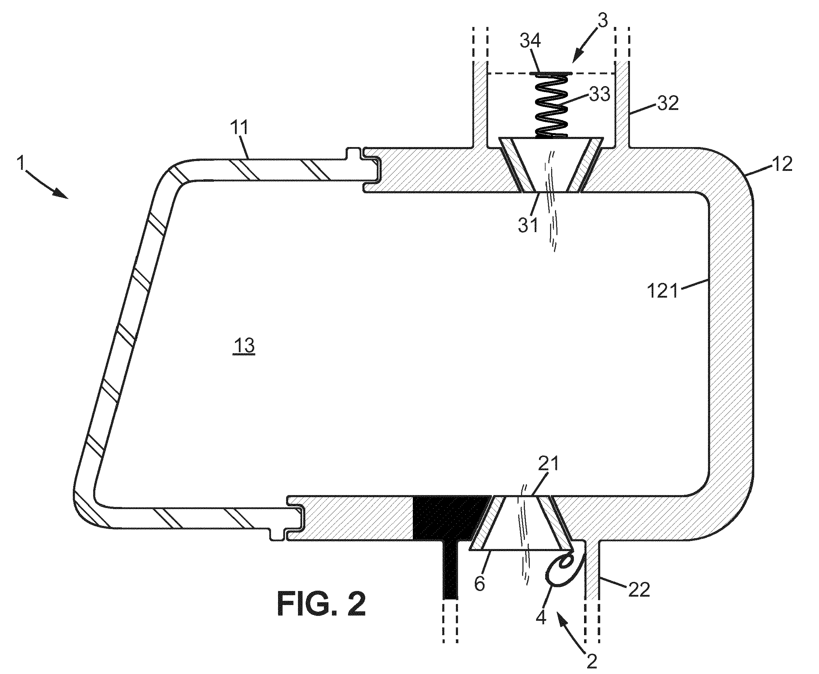

Comme illustré sur les figures 1 et 2, un dispositif lumineux pour véhicule automobile 0 comprend généralement une glace 11 et un boitier 12 concave. La glace est agencée en vis-à-vis de la concavité du boitier de sorte que soit formée une enceinte 13 sensiblement imperméable. Typiquement, la surface interne 121 du boitier peut être au moins partiellement réfléchissante et au moins une source lumineuse 14 peut être agencée dans sa concavité pour assurer différentes fonctions de signalisation et/ou d'éclairage. Dans un mode de réalisation complémentaire ou alternatif, le boitier comprend au moins un réflecteur agencé dans la concavité et destiné à coopérer avec la source lumineuse pour assurer différentes fonctions de signalisation et/ou d'éclairage. Par exemple, la source lumineuse peut comprendre au moins un élément émetteur à semi-conducteur ; elle peut plus particulièrement être une diode électroluminescente.

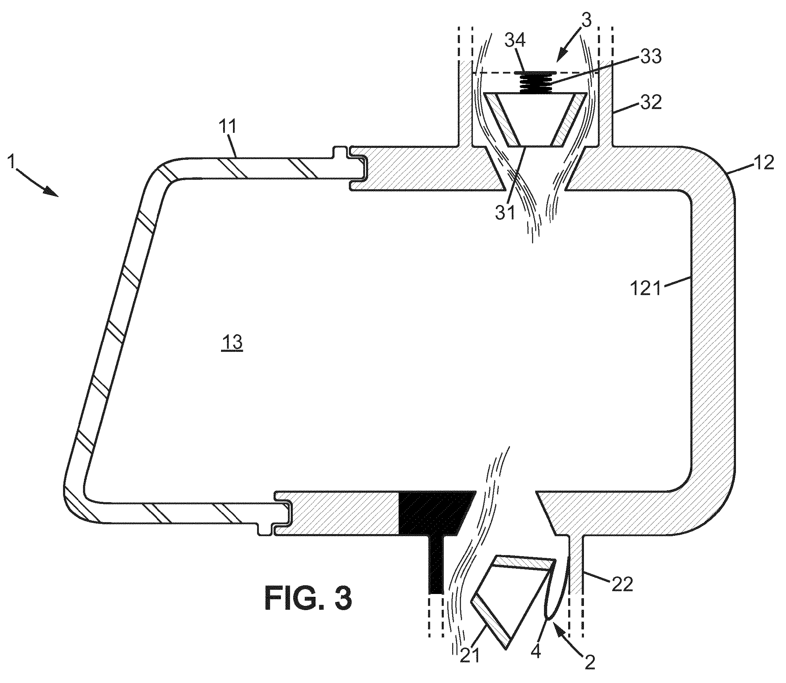

Comme illustré sur les figures 2 et 3, le dispositif lumineux 1 selon l'invention comprend au moins un premier orifice 2 de passage d'air. Ce premier orifice 2 peut plus particulièrement être un orifice d'entrée ou d'admission d'air depuis l'extérieur du dispositif lumineux jusqu'à l'intérieur du dispositif lumineux. Le dispositif lumineux 1 peut en outre comprendre au moins un deuxième orifice de passage d'air 3. Ce deuxième orifice 3 permet le passage d'air depuis l'extérieur ou l'intérieur du dispositif 1. Ce deuxième orifice 3 peut plus particulièrement être un orifice de sortie et/ou d'évacuation d'air depuis l'intérieur 13 du dispositif lumineux jusqu'à l'extérieur du dispositif lumineux. Les premier et deuxième orifices 2, 3 sont préférentiellement pratiqués dans le boitier 12 du dispositif lumineux. Le deuxième orifice 3 permet à l'air admis par le premier orifice 2 d'être évacué. Un tel orifice est souhaitable pour favoriser la circulation de l'air entre l'intérieur et l'extérieur de l'enceinte 13 du dispositif lumineux, et peut être nécessaire pour que la pression d'air dans le dispositif lumineux ne dépasse pas une valeur seuil au-delà de laquelle le dispositif lumineux peut être endommagé.

Selon le mode de réalisation représenté sur les figures 2 et 3, les orifices 2, 3 sont pratiqués à travers les parois latérales du boîtier 12 du dispositif lumineux.

Dans un mode de réalisation complémentaire ou alternatif, au moins un des premier et deuxième orifices 2, 3 peut être positionné à l'avant du dispositif lumineux, et notamment sur la glace 11 du dispositif lumineux. Il peut alors être protégé par une partie du véhicule pour accroître l'efficacité de l'effet de surpression en roulage.

Comme représenté sur les figures 2 et 3, chaque orifice 2,3 peut se prolonger vers l'extérieur du phare par une paroi cylindrique 22, 32. Un tube (non représenté) peut être agencé sur chaque orifice, et plus particulièrement peut être emmanché sur la paroi cylindrique prolongeant chaque orifice. Un tube agencé sur le premier orifice 2 peut être orienté, par exemple en formant un coude, vers l'avant du véhicule, pour présenter une prise d'air optimale lorsque le véhicule se déplace en avant. Au contraire, un tube agencé sur l'orifice de sortie peut être orienté vers l'arrière du véhicule et peut présenter en outre des chicanes destinées à s'opposer à la pénétration de poussières et de liquides dans le dispositif lumineux.

Le dispositif lumineux selon l'invention comprend en outre au moins un obturateur 21 agencé sur le premier orifice 2 et un actionneur 4 d'obturateur(s). Selon un mode de réalisation préféré, un autre obturateur 31 peut être agencé sur le deuxième orifice 3. En outre, un même actionneur peut être agencé pour déplacer une pluralité d'obturateurs ou chaque obturateur peut être associé à un actionneur qui lui est propre.

Chaque obturateur d'orifice peut être déplacé par un actionneur entre une position dite de fermeture de l'orifice et une position dite d'ouverture de l'orifice. L'actionneur peut également être apte à déplacer chaque obturateur en une position intermédiaire entre sa position de fermeture et sa position d'ouverture ; une ventilation d'efficacité continûment variable peut ainsi être obtenue.

Chaque obturateur peut être constitué de polymère et/ou de métal et/ou en caoutchouc.

L'obturateur peut prendre une forme cylindrique ou une forme tronconique ou toute autre forme adaptée pour obstruer au moins partiellement l'orifice auquel il est associé. Sur la figure 3, l'obturateur 21, 31 est de forme tronconique. Il peut être plein, mais présente préférentiellement au moins un orifice traversant permettant un échange d'air entre l'extérieur et l'intérieur du dispositif lumineux.

Chaque obturateur peut en outre comprendre au moins une membrane 6 imperméable aux liquides et aux poussières et perméable à l'air. Cette membrane peut être tissée. Cette membrane est plus particulièrement agencée sur ledit au moins un orifice traversant de chaque obturateur. Ainsi, lorsque les obturateurs sont en position de fermeture, de l'air continue d'être échangé entre l'intérieur et l'extérieur du dispositif lumineux.

La quantité d'air échangée lorsque les obturateurs sont en position de fermeture est fonction de la surface de l'orifice le traversant et de la présence ou non d'une membrane 6. L'orifice traversant un obturateur peut être de forme cylindrique ; il est préférentiellement de forme tronconique ou de toute autre forme adaptée pour contrôler de façon aérodynamique une accélération ou une décélération du flux d'air passant au travers. Lorsqu'une membrane est présente, la quantité d'air échangée est alors aussi fonction de la porosité de la membrane.

La quantité d'air échangée est toutefois moindre que la quantité d'air échangée lorsque les obturateurs sont en position d'ouverture. Cette caractéristiques est illustrée sur les figures 2 et 3 par les traits courbes discontinus traversant le premier orifice 2 et le deuxième orifice 3, les traits courbes discontinus de la figure 2 avec obturateurs en position de fermeture étant plus moins nombreux que les traits courbes discontinus de la figure 3 avec obturateurs en position d'ouverture.

Lorsque le dispositif lumineux comprend plusieurs obturateurs 21, 31, ils peuvent être déplacés de façon conjointe, de sorte que, à chaque instant, ils soient tous en position de fermeture ou tous en positon, éventuellement relative, d'ouverture.

Le dispositif lumineux permet ainsi d'atteindre :
- une ventilation efficace, lorsque les obturateurs sont en position d'ouverture, que le véhicule soit en mouvement ou l'arrêt, et
- une relative obstruction à la pénétration de poussières et de liquides, lorsque les obturateurs sont en position de fermeture, notamment quand le véhicule est à l'arrêt.

De façon alternative, lorsque le dispositif lumineux comprend plusieurs obturateurs 21, 31, ils peuvent être déplacés de façon indépendante.

Comme illustré sur les figures 2 et 3, l'obturateur 31 du deuxième orifice peut ne pas être associé avec un actionneur. En effet, il peut être avantageusement prévu d'utiliser, pour déplacer l'obturateur 31 de sortie, la variation de pression dans le dispositif lumineux, cette variation étant liée au passage d'une position de fermeture à une position d'ouverture, ou vice versa, de l'obturateur 21 d'entrée. L'obturateur 31 de sortie fonctionne alors comme une valve :
- maintenue en position d'ouverture lorsque la pression dans le phare est supérieure à une valeur seuil déterminée, et en particulier lorsque l'obturateur 21 d'entrée est en position d'ouverture, et
- maintenue en position de fermeture lorsque la pression dans le phare est inférieure à une valeur seuil déterminée, et en particulier lorsque l'obturateur 21 d'entrée est en position de fermeture. A cet effet, un moyen de rappel, tel qu'une pièce à mémoire de forme ou un électroaimant ou un ressort 33 agencé conjointement avec une butée 34, peut permettre d'exercer, sur la valve, une force de rappel de la valve en position de fermeture.

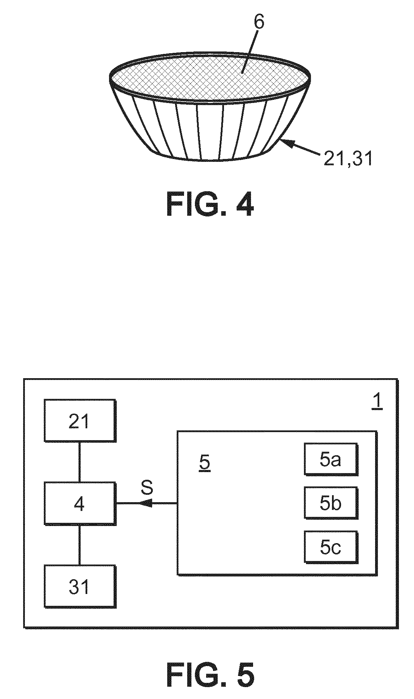

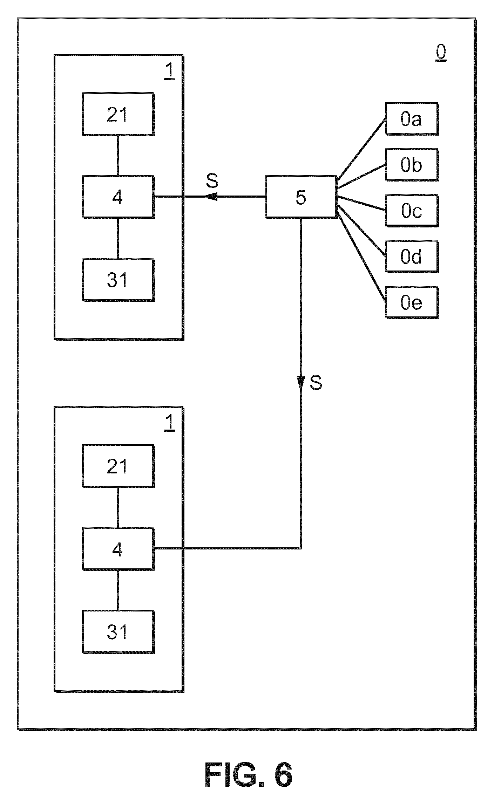

L'actionnement d'au moins un obturateur par l'actionneur peut être manuel. Le conducteur du véhicule peut par exemple actionner lui-même l'obturateur. Toutefois, comme illustré sur les figures 5 et 6, il est avantageusement envisagé d'automatiser l'actionnement des obturateurs au moyen d'un dispositif de contrôle 5 de l'actionneur 4. Le dispositif de contrôle est alors agencé pour envoyer un signal S de contrôle à l'actionneur qui déplace l'obturateur en fonction de ce signal.

Par exemple, l'actionneur 4 est un actionneur à mémoire de forme, un actionneur motorisé ou un actionneur à électroaimants, et le dispositif de contrôle 5 envoie à l'actionneur un signal S déterminé, tel qu'un courant électrique, pour modifier la position de l'obturateur. L'actionneur 4 illustré sur les figures 2 et 3 est un actionneur à mémoire de forme.

De préférence, chaque obturateur est en position de fermeture lorsqu'aucun signal S de contrôle n'est délivré à l'actionneur par le dispositif de contrôle. On évite ainsi d'avoir à délivrer un signal S de contrôle à l'actionneur, notamment lorsque le véhicule est à l'arrêt ou quand il n'y a pas de condensation. Cela permet d'éviter les entrées d'eau et/ou d'humidité et/ou de poussière en cas de brusques changements climatiques par exemple. L'utilisation d'un signal S numérique peut également être envisagée ; toutefois, l'actionneur devrait alors être équipé de moyens de traitement adaptés, ce qui peut représenter un coût supplémentaire.

Le signal S envoyé par le dispositif de contrôle 5 à l'actionneur 4 peut être fonction d'un signal de mesure d'une grandeur détectée par un capteur spécifique au dispositif de contrôle ou par un capteur équipant le véhicule et destiné à être fonctionnellement relié au dispositif de contrôle.

Comme illustré sur la figure 5, les capteurs propres au dispositif de contrôle peuvent comprendre l'un au moins parmi un capteur de point de rosée 5a, un capteur d'humidité 5b et un capteur de vitesse 5c du véhicule. Dans un mode de réalisation complémentaire ou alternatif, une caméra peut être agencée conjointement avec la glace 11 du dispositif lumineux pour détecter si la glace 11 est embuée ou non. Le capteur de point de rosée et le capteur d'humidité peuvent être agencés directement dans le dispositif lumineux, et préférentiellement près de la glace 11, pour procurer une mesure directement relative à l'air compris dans l'enceinte du dispositif lumineux 1. Le capteur de vitesse peut être un tube de Pitot agencé par exemple de façon à déboucher en avant du dispositif lumineux. Selon ce mode de réalisation, il peut être avantageux que le dispositif de contrôle 5 soit agencé dans l'enceinte du dispositif lumineux ou à proximité de celle-ci. En outre, le dispositif lumineux selon ce mode de réalisation peut être autonome dans la gestion de sa ventilation et comprendre notamment une ressource en énergie électrique.

Comme illustré sur la figure 6, le dispositif de contrôle peut être destiné à être relié à un ou plusieurs capteurs déjà connus pour équiper des véhicules automobiles 0. De tels capteurs comprennent par exemple un capteur de vitesse 0a de rotation des roues du véhicule, un accéléromètre 0b, un capteur de pluie 0c, un capteur d'un état de démarrage ou d'arrêt du moteur du véhicule Od, un capteur d'humidité de l'air ambiant 0e, etc. Selon ce mode de réalisation, le dispositif de contrôle 5 peut être agencé à distance du dispositif lumineux 1 ; une centralisation du contrôle de la ventilation d'une pluralité de dispositifs lumineux d'un véhicule peut ainsi être avantageusement atteinte. Le dispositif de contrôle est alors agencé pour recevoir un signal de mesure d'un capteur équipant le véhicule et pour contrôler au moins un actionneur (4) en fonction dudit signal de mesure.

Il doit être évident pour l'homme du métier que le dispositif de contrôle peut bénéficier de couplages de mesures issues de capteurs qui lui sont spécifiques et de capteurs équipant, de façon connue, le véhicule.

Le dispositif lumineux selon les modes de réalisation décrits ci-dessus offre une large gamme de modes opératoires.

Par exemple, quand le dispositif lumineux contient de l'air sec et se trouve dans un environnement humide et/ou poussiéreux, une ventilation avec un faible coefficient d'échange est adaptée ; les obturateurs sont en position de fermeture.

Par un autre exemple, quand l'air ambiant n'est pas humide et qu'il n'y a pas de poussière, une ventilation avec un fort coefficient d'échange est adaptée ; les obturateurs sont en position d'ouverture.

Par un autre exemple, quand à l'intérieur du dispositif lumineux, le point de rosée est atteint, caractérisant ainsi une forte condensation interne, une ventilation avec un fort coefficient d'échange est adaptée ; les obturateurs sont en position d'ouverture.

Par un autre exemple, lorsque la vitesse du véhicule dépasse une valeur seuil, par exemple 10 km/h, les obturateurs sont automatiquement déplacés en position d'ouverture, pour bénéficier de l'effet dynamique du véhicule notamment lorsque l'air ambiant est sec et sans poussière.

Selon un exemple cinématique :
- lorsqu'une humidité inférieure au point de rosée est mesurée, les obturateurs sont en position de fermeture, puis
- lorsque l'humidité augmente et atteint ou dépasse le point de rosée, les obturateurs sont déplacés en position d'ouverture, puis
- lorsque l'humidité repasse en-dessous du point de rosée, les obturateurs sont déplacés en position de fermeture.

## Revendications

1. Dispositif lumineux (1) pour véhicule automobile (0) comprenant :
- au moins un premier orifice (2) de passage d'air, et
- un premier obturateur (21) dudit au moins un premier orifice (2),
le premier obturateur (21) étant apte à être déplacé entre une position dite de fermeture et une position dite d'ouverture du premier orifice (2).

2. Dispositif selon la revendication précédente, comprenant un premier actionneur (4) d'obturateur apte à déplacer le premier obturateur (21) entre la position de fermeture et la position d'ouverture du premier orifice (2).

3. Dispositif lumineux selon la revendication 2, comprenant un dispositif de contrôle (5) d'actionneur(s) destiné à contrôler le premier actionneur (4) pour déplacer le premier obturateur (21).

4. Dispositif lumineux selon l'une quelconque des revendications précédentes, comprenant un deuxième orifice (3) de passage d'air.

5. Dispositif lumineux selon la revendication 4, comprenant un deuxième obturateur (31) du deuxième orifice (3).

6. Dispositif lumineux selon la revendication 5, dans lequel le deuxième obturateur (31) est agencé pour être déplacé conjointement avec le premier obturateur (21) du premier orifice (2).

7. Dispositif lumineux selon les revendications 3 à 5 et la revendication 6, dans lequel le dispositif de contrôle (5) d'actionneur(s) est destiné à contrôler un deuxième actionneur (33) pour déplacer le deuxième obturateur (31).

8. Dispositif lumineux selon la revendication précédente, dans lequel le dispositif de contrôle (5) d'actionneur(s) contrôle simultanément le premier actionneur (4) et le deuxième actionneur (33) pour déplacer le premier obturateur (21) et le deuxième obturateur (31).

9. Dispositif lumineux selon l'une quelconque des revendications précédentes, dans lequel au moins un obturateur (21, 31) comprend une membrane (6) imperméable aux liquides et aux poussières et perméable à l'air.

10. Dispositif lumineux selon l'une quelconque des revendications 5 à 9, dans lequel chaque obturateur (21, 31) est de forme adaptée pour permettre une circulation d'air contrôlée entre l'intérieur et l'extérieur du dispositif lumineux, lorsque l'obturateur est en position de fermeture.

11. Dispositif lumineux selon l'une quelconque des revendications 5 à 10, dans lequel chaque obturateur (21, 31) est de dimensions adaptées pour permettre une circulation d'air contrôlée entre l'intérieur et l'extérieur du dispositif lumineux, lorsque l'obturateur est en position de fermeture.

12. Dispositif lumineux selon l'une quelconque des revendications 3 à 11, dans lequel le dispositif de contrôle (5) comprend un capteur de point de rosée et/ou un capteur d'humidité et/ou un capteur de vitesse du véhicule.

13. Dispositif lumineux selon l'une quelconque des revendications 3 à 12, dans lequel le dispositif de contrôle (5) est agencé pour recevoir un signal de mesure d'un capteur équipant le véhicule et pour contrôler au moins un actionneur (4) en fonction dudit signal de mesure.
